# EUROPEAN PATENT SPECIFICATION

(11) **EP 3 038 408 B1**
(45) Date of publication and mention of the grant of the patent: **04.10.2017**
(21) Application number: 14838288.0
(22) Date of filing: 19.08.2014
(51) Int. Cl.: H04W 36/02, H04W 36/04

(54) **MOBILE COMMUNICATION METHOD**
MOBILKOMMUNIKATIONSVERFAHREN
PROCÉDÉ DE COMMUNICATION MOBILE

(30) Priority: 20.08.2013 JP 2013170314
(43) Date of publication of application: 29.06.2016
(73) Proprietor: NTT DOCOMO, INC., Chiyoda-ku Tokyo 100-6150 (JP)
(72) Inventor: UCHINO, Tooru, Tokyo 100-6150 (JP); KISHIYAMA, Yoshihisa, Tokyo 100-6150 (JP); CHEN, Lan, Beijing 100190 (CN); LIU, Liu, Beijing 100190 (CN)
(74) Representative: Hoffmann Eitle
(86) International application number: PCT/JP2014/071659
(87) International publication number: WO 2015/025846

(56) References cited:
- WO-A1-2012/081501
- WO-A1-2015/025804
- WO-A1-2015/025888
- US-A1- 2013 028 236
- HUAWEI ET AL: "Analysis of Latency Related Issues for UP Protocol Alternatives", 3GPP DRAFT; R2-131786, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 11 May 2013 (2013-05-11), XP050700051, Retrieved from the Internet: URL:http://www.3gpp.org/ftp/tsg_ran/WG2_RL 2/TSGR2_82/Docs/ [retrieved on 2013-05-11]
- PANTECH: "Factors impacting backhaul latency for dual connectivity", 3GPP DRAFT; R2-132500, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 August 2013 (2013-08-09), XP050718202, Retrieved from the Internet: URL:http://www.3gpp.org/ftp/tsg_ran/WG2_RL 2/TSGR2_83/Docs/ [retrieved on 2013-08-09]
- NOKIA SIEMENS NETWORKS (RAPPORTEUR): "Email Discussion Report on U-Plane Alternatives [81bis#19]", 3GPP DRAFT; R2-131621 SCE UPLANE EMAIL DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 10 May 2013 (2013-05-10), XP050699806, Retrieved from the Internet: URL:http://www.3gpp.org/ftp/tsg_ran/WG2_RL 2/TSGR2_82/Docs/ [retrieved on 2013-05-10]
- HUAWEI ET AL.: 'Considerations on the CP Architecture' 3GPP R2-132878, 3GPP 08 October 2013, XP050718579

## Description

### TECHNICAL FIELD

The present invention relates to a mobile communication method.

### BACKGROUND ART

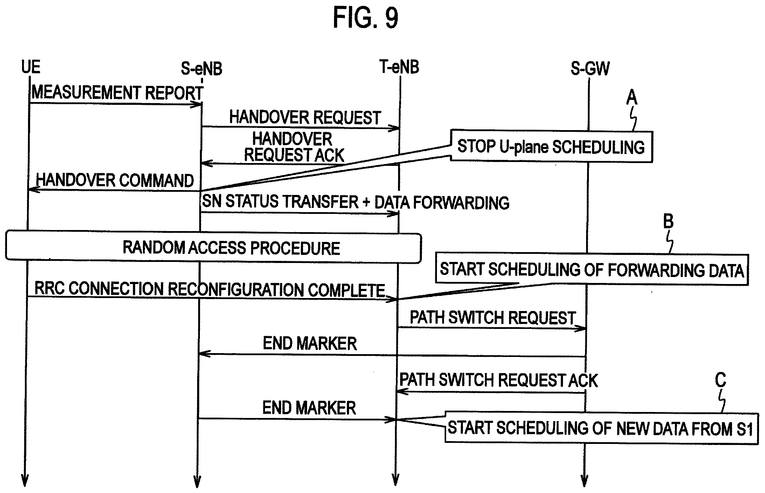

In LTE (Long Term Evolution), a handover control is specified in order that a mobile station UE can perform communications in an optimal cell even when the mobile station UE moves (see Fig. 9).

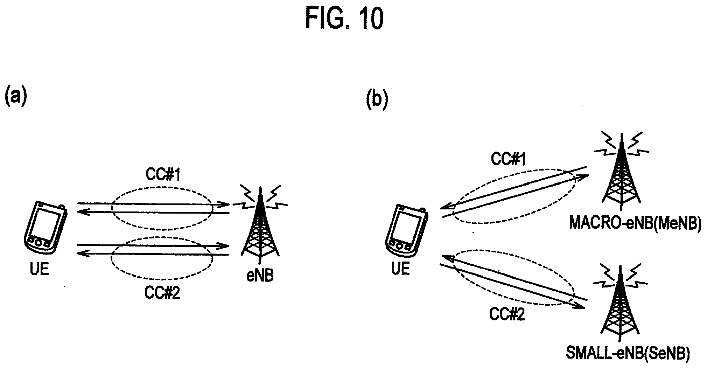

Moreover, CA (Carrier Aggregation) specified until LTE Release-10 is able to achieve the high throughput by performing simultaneous communication using a CC (Component Carrier) #1 and a CC#2 under the same radio base station eNB, as illustrated in Fig. 10(a).

Meanwhile, in LTE Release-12, discussed is "Inter-node UP aggregation" to which the CA until LTE Release-10 is further extended. The "Inter-node UP aggregation" achieves high throughput by performing simultaneous communication using a CC#1 and a CC#2 respectively under different radio base stations eNB#1 and eNB#2, as illustrated in Fig. 10(b) (see Non-patent document 1).

For example, if all the CCs cannot be accommodated in a single radio base station eNB, it is necessary to perform the "Inter-node UP aggregation" in order to achieve the throughput comparable to that of LTE Release-10.

Further, in the "Inter-node UP aggregation", an anchoring node is expected to distribute downlink data to transmit the downlink data to a mobile station UE.

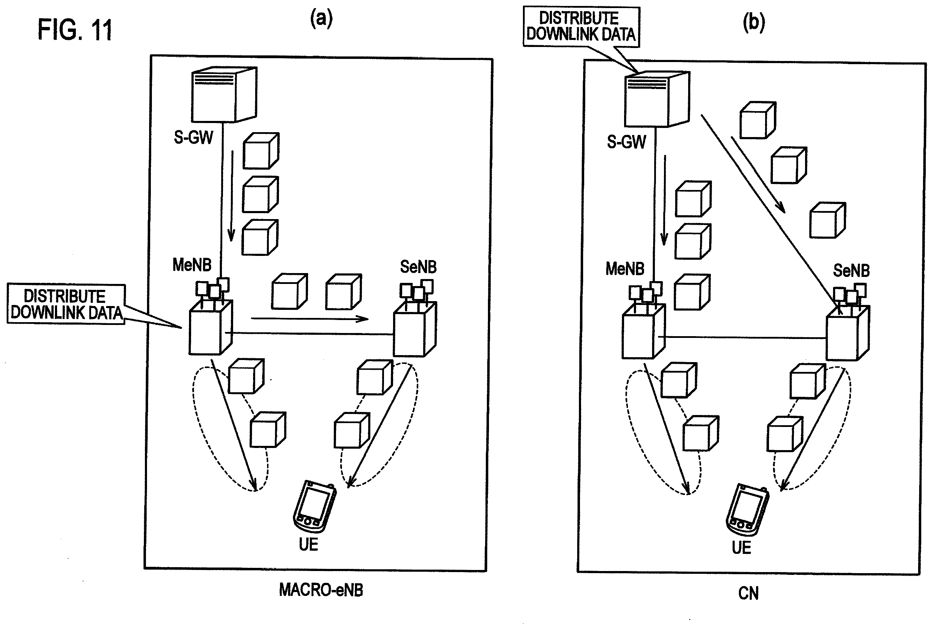

For example, a radio base station MeNB that manages a macro cell is an anchoring node in an example of Fig. 11(a), and a gateway device S-GW is an anchoring node in an example of Fig. 11(b).

### PRIOR ART DOCUMENT

### NON-PATENT DOCUMENT

Non-patent document 1: 3GPP TDocs (written contribution) R2-131782
HUAWEI ET AL: "Analysis of Latency Related Issues for UP Protocol Alternatives", 3GPP DRAFT; R2-131786, vol. RAN WG2, no. Fukuoka, Japan, 11 May 2013, latency issues in connection with data forwarding at SeNB change, i.e. when the connection between the UE and the network is changed from "MeNB + Source SeNB" to "MeNB + Target SeNB". Here, the SeNB change procedure proposes to send a measurement report from the UE to the MeNB, the MeNB making a decision on SeNB change and sending a SeNB change request to a Target SeNB. Upon receiving a SeNB change request response, the MeNB performs a reconfiguration of Source SeNB operation with the UE, and the Source SeNB sends buffered and in transit packets to the Target SeNB.
PANTECH: "Factors impacting backhaul latency for dual connectivity", 3GPP DRAFT; R2-132500, vol. RAN WG2, Bacrcelona, Spain, 9 August 2013, discusses UP alternative, whether MeNB acts as intermediate node of backhaul networks or not, backhaul network's topology, limited length of the backhaul technology, and combinations thereof as factors impacting the backhaul latency.
NOKIA SIEMENS NETWORKS: "Email Discussion Report on U-Plane Alternatives [81bis#19]. 3GPP DRAFT; R2-131621, vol. RAN WG2, no. Fukuoka, Japan, 10 May 2013, considers user plane alternatives, in particular independent PDCPs, Master-Slave PDCPs, Independent RLCs, and Master-Slave RLCs.

### SUMMARY OF THE INVENTION

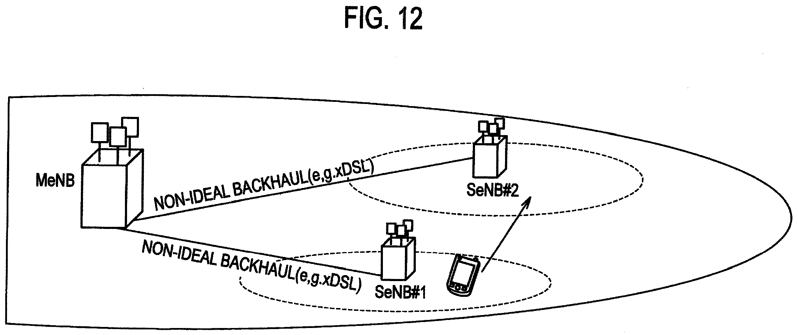

In one conceivable way of "Inter-node UP aggregation", an existing handover control may be applied in order to switch a radio base station SeNB managing a small cell. However, as illustrated in Fig. 12, low-speed lines such as xDSLs are supposed to be used as backhaul lines between the radio base station MeNB and the radio base stations SeNB.

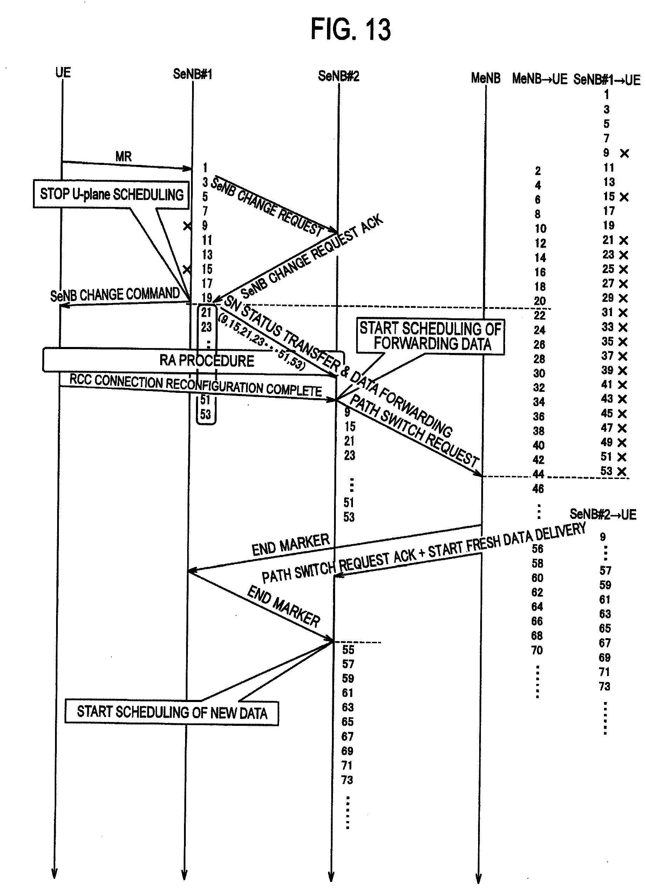

In the "Inter-node UP aggregation" to which the existing handover control is applied, as illustrated in Fig. 13, downlink data destined for a mobile station UE is forwarded from the radio base station MeNB to a radio base station SeNB#1, and thereafter is further forwarded from the radio base station SeNB#1 to a radio base station SeNB#2.

In this regard, use of the low-speed line as the above-described backhaul line causes a problem in that forwarding of downlink data destined for the mobile station UE from the radio base station MeNB to the radio base station SeNB#1 described above takes time, but results in unnecessary forwarding.

Therefore, the present invention has been made in view of the problem described above, and an objective thereof is to provide a mobile communication method capable of, in switching a radio base station SeNB from a radio base station SeNB#1 to another radio base station SeNB#2 in "Inter-node UP aggregation", avoiding unnecessary forwarding of downlink data destined for a mobile station UE and quickly performing the switching of the radio base station SeNB.

A first feature of the present invention is summarized as a mobile communication method according to the features of independent claim 1.

A second feature of the present invention is summarized as a mobile communication method according to the features of claim 2.

A third feature of the present invention is summarized as a mobile communication method according to the features of claim 3.

A fourth feature of the present invention is summarized as a mobile communication method according to the features of claim 4.

A fifth feature of the present invention is summarized as a mobile communication method according to the features of claim 5.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a function block diagram of a mobile station according to the first embodiment of the present invention.
[Fig. 3] Fig. 3 is a sequence diagram illustrating an example (operation example 1) of an operation by the mobile communication system according to the first embodiment of the present invention.
[Fig. 4] Fig. 4 is a sequence diagram illustrating another example (operation example 2) of the operation by the mobile communication system according to the first embodiment of the present invention.
[Fig. 5] Fig. 5 is a sequence diagram illustrating another example (operation example 3) of the operation by the mobile communication system according to the first embodiment of the present invention.
[Fig. 6] Fig. 6 is a function block diagram of a radio base station according to a second embodiment of the present invention.
[Fig. 7] Fig. 7 is a sequence diagram illustrating an example (operation example 1) of an operation by a mobile communication system according to the second embodiment of the present invention.
[Fig. 8] Fig. 8 is a sequence diagram illustrating another example (operation example 2) of the operation by the mobile communication system according to the second embodiment of the present invention.
[Fig. 9] Fig. 9 is a diagram for explaining handover control processing.
[Fig. 10] Fig. 10 is a diagram for explaining CA until Release-10 and an "Inter-node UP aggregation".
[Fig. 11] Fig. 11 is diagram for explaining distribution of downlink data in the "Inter-node UP aggregation".
[Fig. 12] Fig. 12 is a diagram for explaining switching of a small-cell radio base station in the "Inter-node UP aggregation".
[Fig. 13] Fig. 13 is a diagram for explaining handover control processing in the "Inter-node UP aggregation".

### MODE FOR CARRYING OUT THE INVENTION

### (First Embodiment of the Present Invention)

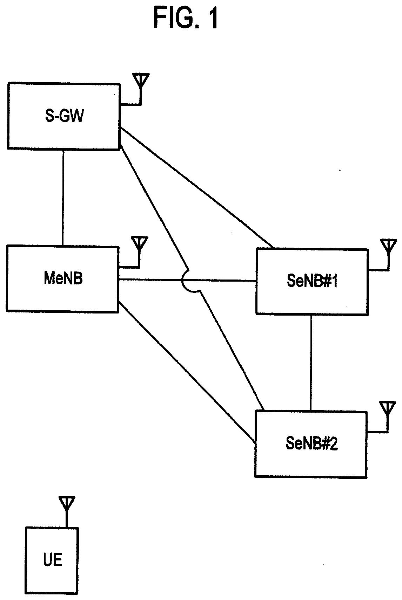

A mobile communication system according to a first embodiment of the present invention is described with reference to Figs. 1 to 5.

As illustrated in Fig. 1, the mobile communication system according to the present embodiment is a mobile communication system of LTE, and includes a gateway device S-GW, a radio base station MeNB that manages a macro cell, a radio base station SeNB#1 that manages a small cell #1, a radio base station SeNB#2 that manages a small cell #2, and a mobile station UE.

In the mobile communication system according to the present embodiment, the mobile station UE is configured to be capable of performing CA using a CC under the radio base station MeNB and a CC under the radio base station SeNB#1 (or, a CC under the radio base station SeNB#2).

In other words, the mobile communication system according to the present embodiment is configured to be capable of performing the "Inter-node UP aggregation".

Moreover, the mobile communication system according to the present embodiment may be configured such that when the mobile station UE performs the "Inter-node UP aggregation" with the radio base station MeNB and the radio base station SeNB#1, the radio base station MeNB buffers entire downlink data to be transmitted via the radio base station SeNB#1 to the mobile station UE.

In other words, in this state, the radio base station MeNB is an anchoring node, and may be configured to forward a copy of the above-described downlink data to the radio base station SeNB#1.

Alternatively, the mobile communication system according to the present embodiment is configured such that when the mobile station UE performs the "Inter-node UP aggregation" with the radio base station MeNB and the radio base station SeNB#1, the radio base station MeNB does not buffer entire downlink data to be transmitted via the radio base station SeNB#1 to the mobile station UE.

In other words, in this state, the radio base station MeNB may be configured to be incapable of retransmitting the entire downlink data to be transmitted via the radio base station SeNB#1 to the mobile station UE, to the mobile station UE.

Here, the radio base station MeNB may be an anchoring node, or the gateway device S-GW may be an anchoring node.

Further, the radio base station MeNB may be configured to operate as a simple router without forwarding to the copy of the above-described downlink data to the radio base station SeNB#1.

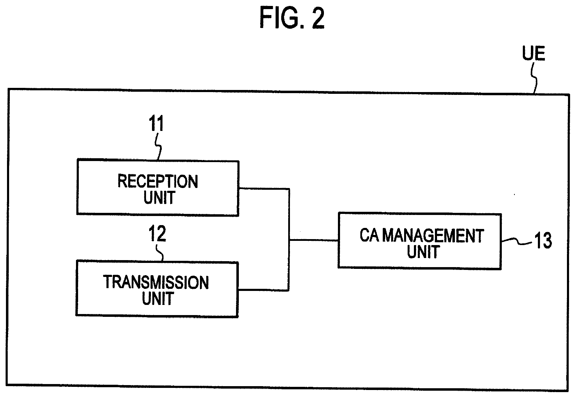

As illustrated in Fig. 2, the mobile station UE according to the present embodiment includes a reception unit 11, a transmission unit 12, and a CA management unit 13.

The reception unit 11 is configured to receive various signals transmitted by the radio base station MeNB, the radio base station SeNB#1. and the radio base station SeNB#2. The transmission unit 12 is configured to transmit various signals to the radio base station MeNB, the radio base station SeNB#1, and the radio base station SeNB#2.

The CA management unit 13 is configured to perform control and management for the above-described CA, in other words, the "Inter-node UP aggregation", in cooperation with the reception unit 11 and the transmission unit 12.

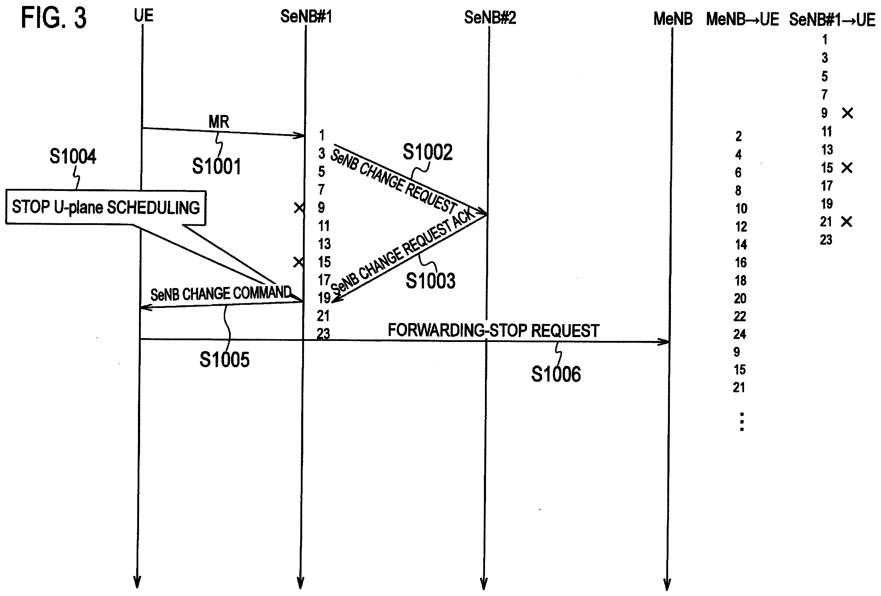

Hereinafter, an operation of the mobile communication system according to the present embodiment is described with reference to Figs. 3 to 5. Specifically, with reference to Figs. 3 to 5, description is provided for an operation of switching a radio base station SeNB that manages a small cell from the radio base station SeNB#1 to the radio base station SeNB#2 when the "Inter-node UP aggregation" is performed in the mobile communication system according to the present embodiment.

Firstly, with reference to Fig. 3, an operation example 1 of the mobile communication system according to the present embodiment is described.

As illustrated in Fig. 3, the radio base station SeNB#1 receives a "Measurement Report" from the mobile station UE at Step S1001, and when determining to switch the radio base station SeNB from the radio base station SeNB#1 to the radio base station SeNB#2, sends the radio base station SeNB#2 an "SeNB change request" that requests switching of the radio base station SeNB at Step S1002.

Thereafter, upon receiving an "SeNB change request ack" from the radio base station SeNB#2 at Step S1003, the radio base station SeNB#1 stops scheduling of downlink data to the mobile station UE at Step S1004, and sends an "SeNB change command" to the mobile station UE at Step S1005.

At Step S1006, in response to the "SeNB change request", the mobile station UE sends the radio base station MeNB a forwarding-stop request that requests stop of forwarding of the downlink data destined for the mobile station UE to the radio base station SeNB#1.

Here, the radio base station MeNB stops the forwarding of the downlink data destined for the mobile station UE to the radio base station SeNB#1, in response to the forwarding-stop request. Further, in an example of Fig. 3, the radio base station MeNB stops forwarding of PDCP-PDUs of sequence numbers "25" and later to the radio base station SeNB#1.

Further, the radio base station SeNB#1 or the mobile station UE may notify the radio base station MeNB of downlink data (PDCP-PDU) the transmission of which to the mobile station UE is not completed (no positive transmission acknowledgement information is received). Moreover, the radio base station SeNB#1 may forward the downlink data to the radio base station MeNB. In the example of Fig. 3, sequence numbers "9", "15", and "21" indicate downlink data the transmission of which to the mobile station UE is not completed.

Moreover, in this operation example 1, the radio base station SeNB#1 may discard downlink data which is retained and the transmission of which to the mobile station UE is not completed.

Subsequent operations are similar to the operations illustrated in Fig. 13.

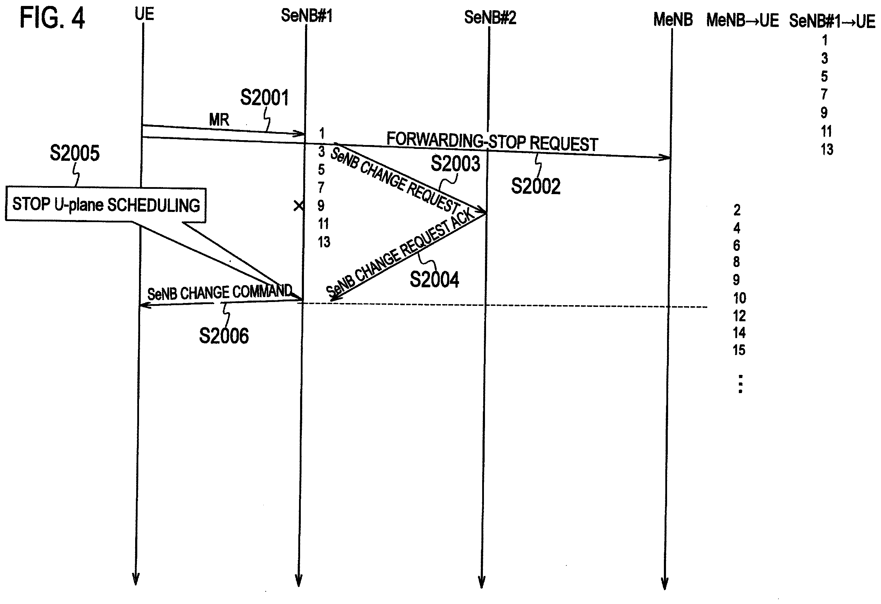

Secondly, with reference to Fig. 4, an operation example 2 of the mobile communication system according to the present embodiment is described.

As illustrated in Fig. 4, the mobile station UE sends a "Measurement Report" to the radio base station SeNB#1 at Step S2001, and sends the radio base station MeNB a forwarding-stop request that requests stop of forwarding of downlink data destined for the mobile station UE to the radio base station SeNB#1 at Step S2002.

Here, the radio base station MeNB stops the forwarding of the downlink data destined for the mobile station UE to the radio base station SeNB#1, in response to the forwarding-stop request. Further, in an example of Fig. 4, the radio base station MeNB stops forwarding of PDCP-PDUs of sequence numbers "15" and later to the radio base station SeNB#1.

Further, the mobile station UE may send the above-described forwarding-stop request at a time point when the mobile station UE receives MAC-ACK or RLC-ACK responding to the above-described "Measurement Report" from the radio base station SeNB#1.

The radio base station SeNB#1 determines to switch the radio base station SeNB from the radio base station SeNB#1 to the radio base station SeNB#2 in response to the "Measurement Report" received from the mobile station UE. Accordingly, the radio base station SeNB#1 sends the radio base station SeNB#2 an "SeNB change request" that requests switching of the radio base station SeNB at Step S2003.

Thereafter, upon receiving the "SeNB change request ack" from the radio base station SeNB#2 at Step S2004, the radio base station SeNB#1 stops scheduling of downlink data to the mobile station UE at Step S2005, and sends an "SeNB change command" to the mobile station UE at Step S2006.

Subsequent operations are similar to the operations illustrated in Fig. 13.

Further, the radio base station SeNB#1 or the mobile station UE may notify the radio base station MeNB of downlink data (PDCP-PDU) the transmission of which to the mobile station UE is not completed. Moreover, the radio base station SeNB#1 may forward the downlink data to the radio base station MeNB.

Moreover, in this operation example 2, the radio base station SeNB#1 may discard downlink data which is retained and the transmission of which to the mobile station UE is not completed.

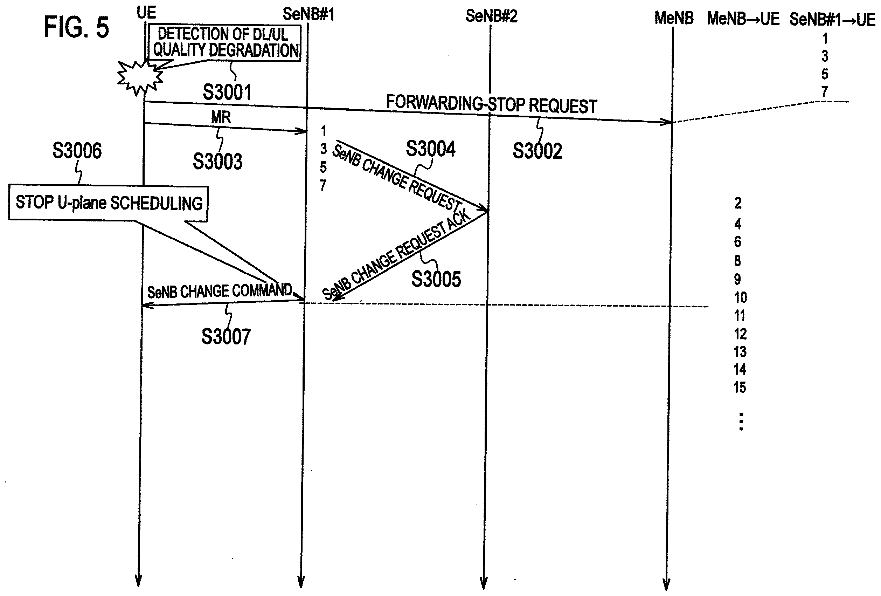

Thirdly, with reference to Fig. 5, an operation example 3 of the mobile communication system according to the present embodiment is described.

As illustrated in Fig. 5, when the mobile station UE detects quality degradation of a radio link (down link and up link) with the radio base station SeNB#1 at Step S3001, the mobile station UE sends the radio base station MeNB a forwarding-stop request that requests stop of forwarding of downlink data destined for the mobile station UE to the radio base station SeNB#1 at Step S3002.

For example, the mobile station UE may detect the quality degradation by observing a value of an RSRP (Reference Signal Received Power), a value of an RSRQ (Reference Signal Received Quality), a value of a CQI (Channel Quality Indicator), an error rate of an HARQ (Hybrid-ARQ), or the like.

Here, the radio base station MeNB stops the forwarding of the downlink data destined for the mobile station UE to the radio base station SeNB#1, in response to the forwarding-stop request. Further, in an example of Fig. 5, the radio base station MeNB stops forwarding of PDCP-PDUs of sequence numbers "9" and later to the radio base station SeNB#1.

Thereafter, the radio base station SeNB#1 receives a "Measurement Report" from the mobile station UE at Step S3003, and determines to switch the radio base station SeNB from the radio base station SeNB#1 to the radio base station SeNB#2. Accordingly, the radio base station SeNB#1 sends the radio base station SeNB#2 an "SeNB change request" that requests switching of the radio base station SeNB at Step S3004.

Thereafter, upon receiving an "SeNB change request ack" from the radio base station SeNB#2 at Step S3005, the radio base station SeNB#1 stops scheduling of downlink data to the mobile station UE at Step S3006, and sends an "SeNB change command" to the mobile station UE at Step S3007.

Subsequent operations are similar to the operations illustrated in Fig. 13.

Further, the radio base station SeNB#1 or the mobile station UE may notify the radio base station MeNB of downlink data (PDCP-PDU) the transmission of which to the mobile station UE is not completed. Moreover, the radio base station SeNB#1 may forward the downlink data to the radio base station MeNB.

Moreover, in this operation example 3, the radio base station SeNB#1 may discard downlink data which is retained and the transmission of which to the mobile station UE is not completed.

Here, in the mobile communication system according to the present embodiment, the radio base station SeNB#1 may forward the above-described "Measurement Report" to the radio base station MeNB, and the radio base station MeNB may determine whether or not to switch the radio base station SeNB from the radio base station SeNB#1 to the radio base station SeNB#2.

According to the mobile communication system according to the present embodiment, in switching the radio base station SeNB from the radio base station SeNB#1 to the radio base station SeNB#2 in the "Inter-node UP aggregation", the forwarding of the downlink data destined for the mobile station UE to the radio base station SeNB#1 can be stopped in response to the above-described forwarding-stop request at a time point before the radio base station MeNB receives a "Path switch request" (see Fig. 13). This makes it possible to avoid unnecessary forwarding of the downlink data destined for the mobile station UE, and to quickly perform the switching of the radio base station SeNB in the present embodiment.

### (Second Embodiment of the Present Invention)

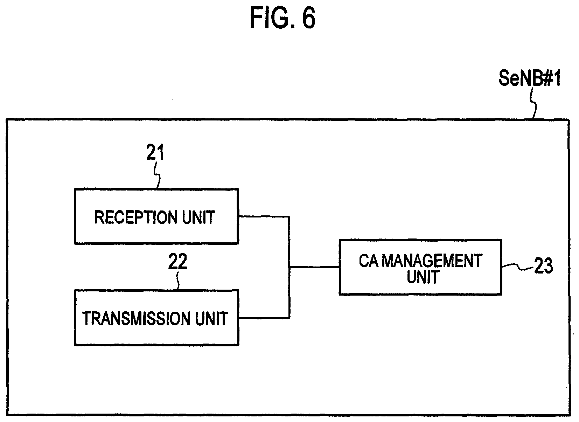

Hereinafter, with reference to Figs. 6 to 8, a mobile communication system according to a second embodiment of the present invention is described by focusing on differences from the above-described mobile communication system according to the first embodiment.

As illustrated in Fig. 6, the radio base station SeNB#1 according to the present embodiment includes a reception unit 21, a transmission unit 22, and a CA management unit 23.

The reception unit 21 is configured to receive various signals transmitted by the radio base station MeNB, the radio base station SeNB#2, and the mobile station UE. The transmission unit 22 is configured to transmit various signals to the radio base station MeNB, the radio base station SeNB#2, and the mobile station UE.

The CA management unit 23 is configured to perform control and management relating to the above-described CA, in other words, the "Inter-node UP aggregation", in cooperation with the reception unit 21 and the transmission unit 22.

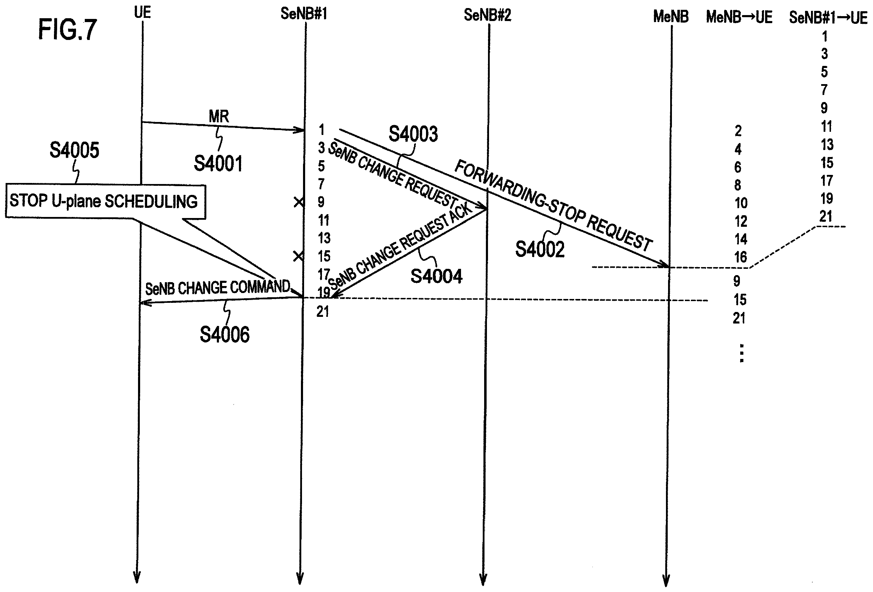

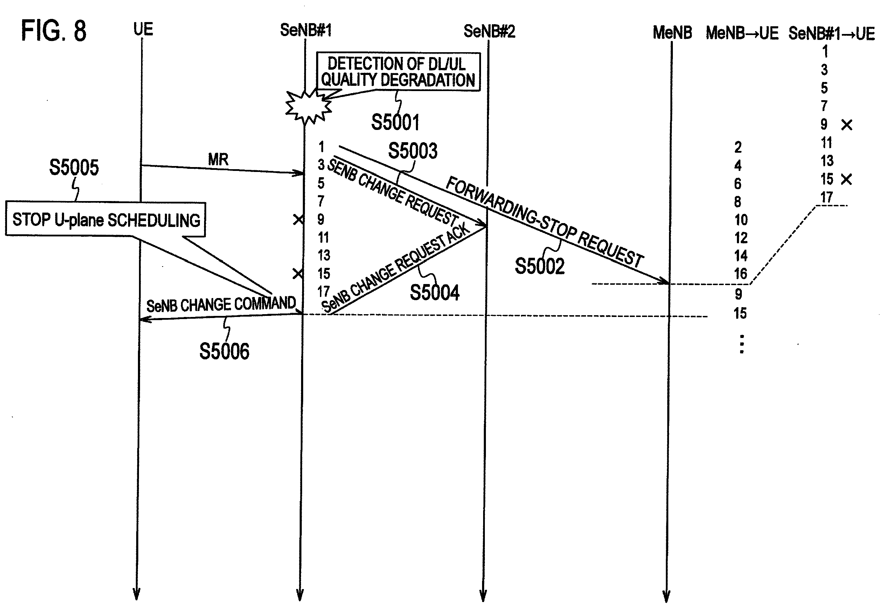

Hereinafter, an operation of the mobile communication system according to the present embodiment is described with reference to Figs. 7 and 8. Specifically, with reference to Figs. 7 and 8, description is provided for an operation of switching the radio base station SeNB from the radio base station SeNB#1 to the radio base station SeNB#2 when the "Inter-node UP aggregation" is performed in the mobile communication system according to the present embodiment.

Firstly, with reference to Fig. 7, an operation example 1 of the mobile communication system according to the present embodiment is described.

As illustrated in Fig. 7, the radio base station SeNB#1 receives a "Measurement Report" from the mobile station UE at Step S4001, and determines to switch the radio base station SeNB from the radio base station SeNB#1 to the radio base station SeNB#2. Accordingly, the radio base station SeNB#1 sends the radio base station MeNB a forwarding-stop request that requests stop of forwarding of downlink data destined for the mobile station UE to the radio base station SeNB#1 at Step S4002, and sends the radio base station SeNB#2 an "SeNB change request" that requests switching of the radio base station SeNB at Step S4003.

Here, the radio base station MeNB stops the forwarding of the downlink data destined for the mobile station UE to the radio base station SeNB#1, in response to the forwarding-stop request. Further, in an example of Fig. 7, the radio base station MeNB stops forwarding of PDCP-PDUs of sequence numbers "23" and later to the radio base station SeNB#1.

Thereafter, upon receiving an "SeNB change request ack" from the radio base station SeNB#2 at Step S4004, the radio base station SeNB#1 stops scheduling of downlink data to the mobile station UE at Step S4005, and sends an "SeNB change command" to the mobile station UE at Step S4006.

Subsequent operations are similar to the operations illustrated in Fig. 13.

Further, the radio base station SeNB#1 or the mobile station UE may notify the radio base station MeNB of downlink data (PDCP-PDU) the transmission of which to the mobile station UE is not completed. Moreover, the radio base station SeNB#1 may forward the downlink data to the radio base station MeNB.

Moreover, in this operation example 1, the radio base station SeNB#1 may discard downlink data which is retained and the transmission of which to the mobile station UE is not completed.

Secondly, with reference to Fig. 8, an operation example 2 of the mobile communication system according to the present embodiment is described.

As illustrated in Fig. 8, when the radio base station SeNB#1 detects quality degradation of a radio link (down link and up link) with the mobile station UE at Step S5001, the radio base station SeNB#1 sends the radio base station MeNB a forwarding-stop request that requests stop of forwarding of downlink data destined for the mobile station UE to the radio base station SeNB#1 at Step S5002.

For example, the radio base station SeNB#1 may detect the quality degradation by observing a value of CQI, the reception quality of SRS (Sounding Reference Signal), an error rate of HARQ, or the like.

Here, the radio base station MeNB stops the forwarding of the downlink data destined for the mobile station UE to the radio base station SeNB#1, in response to the forwarding-stop request. Further, in an example of Fig. 8, the radio base station MeNB stops forwarding of PDCP-PDUs of sequence numbers "19" and later to the radio base station SeNB#1.

Thereafter, the radio base station SeNB#1 receives a "Measurement Report" from the mobile station UE, and when determining to switch the radio base station SeNB from the radio base station SeNB#1 to the radio base station SeNB#2, sends the radio base station SeNB#2 an "SeNB change request" that requests switching of the radio base station SeNB at Step S5003.

Upon receiving an "SeNB change request ack" from the radio base station SeNB#2 at Step S5004, the radio base station SeNB#1 stops scheduling of downlink data to the mobile station UE at Step S5005, and sends an "SeNB change command" to the mobile station UE at Step S5006.

Subsequent operations are similar to the operations illustrated in Fig. 13.

Further, the radio base station SeNB#1 or the mobile station UE may notify the radio base station MeNB of downlink data (PDCP-PDU) the transmission of which to the mobile station UE is not completed. Moreover, the radio base station SeNB#1 may forward the downlink data to the radio base station MeNB.

Moreover, in this operation example 2, the radio base station SeNB#1 may discard downlink data which is retained and the transmission of which to the mobile station UE is not completed.

According to the mobile communication system according to the present embodiment, in switching the radio base station SeNB from the radio base station SeNB#1 to the radio base station SeNB#2 in the "Inter-node UP aggregation", the forwarding of the downlink data destined for the mobile station UE to the radio base station SeNB#1 can be stopped in response to the above-described forwarding-stop request at a point before the radio base station MeNB receives a "Path switch request" (see Fig. 13). This makes it possible to avoid unnecessary forwarding of the downlink data destined for the mobile station UE, and to quickly perform the switching of the radio base station SeNB in the present embodiment.

The features of the present embodiment may also be expressed as follows.

A first feature of the present embodiment is summarized as a mobile communication method to be executed when a mobile station UE performs CA (carrier aggregation) using a macro cell under a radio base station MeNB (macro-cell radio base station) and a small cell under a radio base station SeNB#1 (first small-cell radio base station), the method including: sending, by the radio base station SeNB#1, a radio base station SeNB#2 (second small-cell radio base station) an "SeNB change request (switching request)" that requests radio base station SeNB (small-cell radio base station) switching, when receiving a "Measurement Report" from the mobile station UE; stopping, by the radio base station SeNB#1, scheduling of downlink data destined for the mobile station UE, and sending the mobile station UE an "SeNB change command (switching instruction)" instructing the radio base station SeNB switching, when receiving an "SeNB change request ack (switching request response) " from the radio base station SeNB#2; sending, by the mobile station UE, the radio base station MeNB a forwarding-stop request that requests stop of forwarding of the downlink data destined for the mobile station UE to the radio base station SeNB#1, in response to the "SeNB change command"; and stopping, by the radio base station MeNB, the forwarding of the downlink data destined for the mobile station UE to the radio base station SeNB#1, in response to the forwarding-stop request.

A second feature of the present embodiment is summarized as a mobile communication method to be executed when a mobile station UE performs CA using a macro cell under a radio base station MeNB and a small cell under a radio base station SeNB#1, the method including: sending, by the mobile station UE, the radio base station MeNB a forwarding-stop request that requests stop of forwarding of downlink data destined for the mobile station UE to the radio base station SeNB#1, when transmitting a "Measurement Report" to the radio base station SeNB#1; Stopping, by the radio base station MeNB, the forwarding of the downlink data destined for the mobile station UE to the radio base station SeNB#1, in response to the forwarding-stop request; sending, by the radio base station SeNB#1, a radio base station SeNB#2 an "SeNB change request" that requests radio base station SeNB switching, when receiving the "Measurement Report" from the mobile station UE; and stopping by the radio base station SeNB#1, scheduling of the downlink data destined for the mobile station UE, and sending the mobile station UE an "SeNB change command" instructing the radio base station SeNB switching, when receiving an "SeNB change request ack" from the radio base station SeNB#2.

A third feature of the present embodiment is summarized as a mobile communication method to be executed when a mobile station UE performs CA using a macro cell under a radio base station MeNB and a small cell under a radio base station SeNB#1, the method including: sending, by the mobile station UE, the radio base station MeNB a forwarding-stop request that requests stop of forwarding of downlink data destined for the mobile station UE to the radio base station SeNB#1, when detecting quality degradation of a radio link with the radio base station SeNB#1; stopping, by the radio base station MeNB, the forwarding of the downlink data destined for the mobile station UE to the radio base station SeNB#1, in response to the forwarding-stop request; sending, by the radio base station SeNB#1, a radio base station SeNB#2 an "SeNB change request" that requests radio base station SeNB switching, when receiving a "Measurement Report" from the mobile station UE; and stopping, the radio base station SeNB#1, scheduling of the downlink data destined for the mobile station UE, and sending the mobile station UE an "SeNB change command" instructing the radio base station SeNB switching, when receiving an "SeNB change request ack" from the radio base station SeNB#2.

A fourth feature of the present embodiment is summarized as a mobile communication method to be executed when a mobile station UE performs CA using a macro cell under a radio base station MeNB and a small cell under a radio base station SeNB#1, the method including: sending, by the radio base station SeNB#1, a radio base station SeNB#2 an "SeNB change request" that requests radio base station SeNB switching, and sending the radio base station MeNB a forwarding-stop request that requests stop of forwarding of downlink data destined for the mobile station UE to the radio base station SeNB#1, when receiving a "Measurement Report" from the mobile station UE; stopping, by the radio base station MeNB, the forwarding of the downlink data destined for the mobile station UE to the radio base station SeNB#1, in response to the forwarding-stop request; and stopping, by the radio base station SeNB#1, scheduling of the downlink data destined for the mobile station UE, and sending the mobile station UE an "SeNB change command" instructing the radio base station SeNB switching, when receiving an "SeNB change request ack" from the radio base station SeNB#2.

A fifth feature of the present embodiment is summarized as amobile communication method to be executed when a mobile station UE performs CA using a macro cell under a radio base station MeNB and a small cell under a radio base station SeNB#1, the method including: sending, by the radio base station SeNB#1, the radio base station MeNB a forwarding-stop request that requests stop of forwarding of downlink data destined for the mobile station UE to the radio base station SeNB#1, when detecting quality degradation of a radio link with the mobile station UE; stopping, by the radio base station MeNB, the forwarding of the downlink data destined for the mobile station UE to the radio base station SeNB#1, in response to the forwarding-stop request; sending, by the radio base station SeNB#1, a radio base station SeNB#2 an "SeNB change request" that requests radio base station SeNB switching, when receiving a "Measurement Report" from the mobile station UE; and stopping, by the radio base station SeNB#1, scheduling of the downlink data destined for the mobile station UE, and sending the mobile station UE an "SeNB change command" instructing the radio base station SeNB switching, when receiving an "SeNB change request ack" from the radio base station SeNB#2.

It should be noted that the foregoing operations of the mobile stations UE and the radio base stations MeNB, SeNB#1, and SeNB#2 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE and the radio base stations MeNB, SeNB#1, and SeNB#2. Otherwise, the storage medium and the processor may be provided as discrete components inside the mobile stations UE and the radio base stations MeNB, SeNB#1, and SeNB#2.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which are determined by the description of the scope of claims. Therefore, the description of the specification is intended for illustrative explanation only and does not impose any limited interpretation on the present invention.

### INDUSTRIAL APPLICABILITY

As described above, according to the present invention, it is possible to provide a mobile communication method capable of, in switching a radio base station SeNB from a radio base station SeNB#1 to another radio base station SeNB#2, avoiding unnecessary forwarding of downlink data destined for the mobile station UE, and quickly completing the switching of the radio base station SeNB.

### EXPLANATION OF THE REFERENCE NUMERALS

- S-GW: gateway device
- MeNB, SeNB#1, SeNB#2: radio base station
- UE: mobile station
- 11, 21: reception unit
- 12, 22: transmission unit
- 13, 23: CA management unit

## Claims

1. A mobile communication method to be executed when a mobile station (UE) performs carrier aggregation using a macro cell under a macro-cell radio base station (MeNB) and a small cell under a first small-cell radio base station (SeNB#1), the method comprising:
sending, by the first small-cell radio base station (SeNB#1), to a second small-cell radio base station (SeNB#2) a switching request that requests small-cell radio base station switching, when a measurement report from the mobile station (UE) is received by the first small-cell radio base station (SeNB#1);
stopping, by the first small-cell radio base station (SeNB#1), scheduling of downlink data destined for the mobile station (UE), and sending, by the first small-cell radio base station (SeNB#1), to the mobile station (UE) a switching instruction instructing the small-cell radio base station switching, when a switching request response from the second small-cell radio base station (SeNB#2) is received by the first small-cell radio base station (SeNB#1);
sending, by the mobile station (UE), to the macro-cell radio base station (MeNB) a forwarding-stop request that requests stop of forwarding of the downlink data destined for the mobile station (UE) to the first small-cell radio base station (SeNB#1), in response to receiving, by the mobile station (UE), the switching instruction; and
stopping, by the macro-cell radio base station (MeNB), the forwarding of the downlink data destined for the mobile station (UE) to the first small-cell radio base station (SeNB#1), in response to receiving, by the macro-cell radio base station (MeNB, the forwarding-stop request.

2. A mobile communication method to be executed when a mobile station (UE) performs carrier aggregation using a macro cell under a macro-cell radio base station (MeNB) and a small cell under a first small-cell radio base station (SeNB#1), the method comprising:
sending, by the mobile station (UE), to the macro-cell radio base station (MeNB) a forwarding-stop request that requests stop of forwarding of downlink data destined for the mobile station (UE) to the first small-cell radio base station (SeNB#1), when a measurement report is transmitted, by the mobile station (UE), to the first small-cell radio base station (SeNB#1);
stopping, by the macro-cell radio base station (MeNB), the forwarding of the downlink data destined for the mobile station (UE) to the first small-cell radio base station (SeNB#1), in response to receiving, by the macro-cell radio base station (MeNB), the forwarding-stop request;
sending, by the first small-cell radio base station (SeNB#1), to a second small-cell radio base station (SeNB#2) a switching request that requests small-cell radio base station switching, when the measurement report is received, by the first small-cell radio base station (SeNB#1), from the mobile station (UE); and
stopping, by the first small-cell radio base station (SeNB#1), scheduling of the downlink data destined for the mobile station (UE), and sending, by the first small-cell radio base station (SeNB#1), to the mobile station (UE) a switching instruction instructing the small-cell radio base station switching, when a switching request response is received, by the the first small-cell radio base station (SeNB#1), from the second small-cell radio base station (SeNB#2).

3. A mobile communication method to be executed when a mobile station (UE) performs carrier aggregation using a macro cell under a macro-cell radio base station (MeNB) and a small cell under a first small-cell radio base station (SeNB#1), the method comprising:
sending, by the mobile station (UE), to the macro-cell radio base station (MeNB) a forwarding-stop request that requests stop of forwarding of downlink data destined for the mobile station (UE) to the first small-cell radio base station (SeNB#1), when quality degradation of a radio link with the first small-cell radio base station (SeNB#1) is detected by the mobile station (UE);
stopping, by the macro-cell radio base station (MeNB), the forwarding of the downlink data destined for the mobile station (UE)to the first small-cell radio base station (SeNB#1), in response to receiving, by the macro-cell base station (MeNB), the forwarding-stop request;
sending, by the first small-cell radio base station (SeNB#1), to a second small-cell radio base station (SeNB#2) a switching request that requests small-cell radio base station switching, when a measurement report is received, by the first small-cell radio base station (SeNB#1), from the mobile station (UE); and
stopping, by the first small-cell radio base station (SeNB#1), scheduling of the downlink data destined for the mobile station (UE), and sending, by the first small-cell radio base station (SeNB#1), to the mobile station (UE) a switching instruction instructing the small-cell radio base station switching, when a switching request response is received, by the first small-cell radio base station (SeNB#1), from the second small-cell radio base station (SeNB#2).

4. A mobile communication method to be executed when a mobile station (UE) performs carrier aggregation using a macro cell under a macro-cell radio base station (MeNB) and a small cell under a first small-cell radio base station (SeNB#1), the method comprising:
sending, by the first small-cell radio base station (SeNB#1), to a second small-cell radio base station (SeNB#2) a switching request that requests small-cell radio base station switching, and sending to the macro-cell radio base station (MeNB) a forwarding-stop request that requests stop of forwarding of downlink data destined for the mobile station (UE) to the first small-cell radio base station (SeNB#1), when a measurement report is received, by the first small-cell radio base station (SeNB#1), from the mobile station (UE);
stopping, by the macro-cell radio base station (MeNB), the forwarding of the downlink data destined for the mobile station (UE) to the first small-cell radio base station (SeNB#1), in response to receiving, by the macro-cell radio base station (MeNB), the forwarding-stop request; and
stopping, by the first small-cell radio base station (SeNB#1), scheduling of the downlink data destined for the mobile station (UE), and sending, by the first small-cell radio base station (SeNB#1), to the mobile station (UE) a switching instruction instructing the small-cell radio base station switching, when a switching request response is received, by the first small-cell radio base station (SeNB#1), from the second small-cell radio base station (SeNB#2).

5. A mobile communication method to be executed when a mobile station (UE) performs carrier aggregation using a macro cell under a macro-cell radio base station (MeNB) and a small cell under a first small-cell radio base station (SeNB#1), the method comprising:
sending, by the first small-cell radio base station (SeNB#1), to the macro-cell radio base station (MeNB) a forwarding-stop request that requests stop of forwarding of downlink data destined for the mobile station (UE) to the first small-cell radio base station (SeNB#1), when quality degradation of a radio link with the mobile station (UE) is detected by the first small-cell radio base station (SeNB#1);
stopping, by the macro-cell radio base station (MeNB), the forwarding of the downlink data destined for the mobile station (UE) to the first small-cell radio base station (SeNB#1), in response to receiving, by the macro-cell radio base station (MeNB), the forwarding-stop request;
sending, by the first small-cell radio base station (SeNB#1), to a second small-cell radio base station (SeNB#2) a switching request that requests small-cell radio base station switching, when a measurement report is received, by the first small-cell radio base station (SeNB#1), from the mobile station (UE); and
stopping, by the first small-cell radio base station (SeNB#1), scheduling of the downlink data destined for the mobile station (UE), and sending, by the first small-cell radio base station (SeNB#1), to the mobile station (UE) a change command instructing the small-cell radio base station switching, when a switching request response is received, by the first small-cell radio base station (SeNB#1), from the second small-cell radio base station (SeNB#2).

## Patentansprüche

1. Mobilkommunikationsverfahren, das ausgeführt werden soll, wenn eine Mobilstation (UE) Trägeraggregation unter Verwendung einer Makrozelle unter einer Makrozellenfunkbasisstation (MeNB) und einer Kleinzelle unter einer ersten Kleinzellenfunkbasisstation (SeNB#1) ausführt, wobei das Verfahren umfasst:
Senden mittels der ersten Kleinzellenfunkbasisstation (SeNB#1) an
eine zweite Kleinzellenfunkbasisstation (SeNB#2) einer Vermittlungsanfrage, die eine Kleinzellenfunkbasisstationsvermittlung anfragt, wenn eine Messmeldung von der Mobilstation (UE) empfangen wird mittels der ersten Kleinzellenfunkbasisstation (SeNB#1);
Stoppen, mittels der ersten Kleinzellenfunkbasisstation (SeNB#1), des Festsetzens von Downlinkdaten, die für die Mobilstation (UE) bestimmt sind, und Senden, mittels der ersten Kleinzellenfunkbasisstation (SeNB#1), an
die Mobilstation (UE) einer Vermittlungsanweisung, die die Kleinzellenfunkbasisstation anweist, zu vermitteln, wenn eine Vermittlungsanfrageantwort von der zweiten Kleinzellenfunkbasisstation (SeNB#2) empfangen wird mittels der ersten Kleinzellenfunkbasisstation (SeNB#1);
Senden, mittels der Mobilstation (UE) an
die Makrozellenfunkbasisstation (MeNB) einer Weiterleitungstoppanfrage, die einen Stopp der Weiterleitung der Downlinkdaten anfragt, die für die Mobilstation (UE) bestimmt sind, an die erste Kleinzellenfunkbasisstation (SeNB#1), als Antwort auf das Empfangen, mittels der Mobilstation (UE), der Vermittlungsanweisung; und
Stoppen, mittels der Makrozellenfunkbasisstation (MeNB), der Weiterleitung der Downlinkdaten, die für die Mobilstation (UE) bestimmt sind, an die erste Kleinzellenfunkbasisstation (SeNB#1), als Antwort auf das Empfangen, mittels der Makrozellenfunkbasisstation (MeNB), der Weiterleitungsstoppanfrage.

2. Mobilkommunikationsverfahren, das ausgeführt werden soll, wenn eine Mobilstation (UE) Trägeraggregation unter Verwendung einer Makrozelle unter einer Makrozellenfunkbasisstation (MeNB) und einer Kleinzelle unter einer ersten Kleinzellenfunkbasisstation (SeNB#1) ausführt, wobei das Verfahren umfasst:
Senden, mittels der Mobilstation (UE), an
die Makrozellenfunkbasisstation (MeNB) einer Weiterleitungsstoppanfrage, die einen Stopp der Weiterleitung von Downlinkdaten, die für die Mobilstation (UE) bestimmt sind, anfragt, an die erste Kleinzellenfunkbasisstation (SeNB#1), wenn eine Messmeldung übermittelt wird, mittels der Mobilstation (UE) an die erste Kleinzellenfunkbasisstation (SeNB#1);
Stoppen, mittels der Makrozellenfunkbasisstation (MeNB), der Weiterleitung der Downlinkdaten, die für die Mobilstation (UE) bestimmt sind, an die erste Kleinzellenfunkbasisstation (SeNB#1), als Antwort auf das Empfangen, mittels der Makrozellenfunkbasisstation (MeNB), der Weiterleitungsstoppanfrage;
Senden, mittels der ersten Kleinzellenfunkbasisstation (SeNB#1), an
eine zweite Kleinzellenfunkbasisstation (SeNB#2) einer Vermittlungsanfrage, die eine Kleinzellenfunkbasisstationsvermittlung anfragt, wenn die Messmeldung empfangen wird, mittels der ersten Kleinzellenfunkbasisstation (SeNB#1), von der Mobilstation (UE); und
Stoppen, mittels der ersten Kleinzellenfunkbasisstation (SeNB#1), des Festsetzens der Downlinkdaten, die für die Mobilstation (UE) bestimmt sind, und Senden, mittels der ersten Kleinzellenfunkbasisstation (SeNB#1), an
die Mobilstation (UE) einer Vermittlungsanweisung, die die Kleinzellenfunkbasisstationsvermittlung anweist, wenn eine Vermittlungsanfrageantwort empfangen wird, mittels der ersten Kleinzellenfunkbasisstation (SeNB#1), von der zweiten Kleinzellenfunkbasisstation (SeNB#2).

3. Mobilkommunikationsverfahren, das ausgeführt werden soll, wenn eine Mobilstation (UE) Trägeraggregation unter Verwendung einer Makrozelle unter einer Makrozellenfunkbasisstation (MeNB) und einer Kleinzelle unter einer ersten Kleinzellenfunkbasisstation (SeNB#1) ausführt, wobei das Verfahren umfasst:
Senden, mittels der Mobilstation (UE) an die Makrozellenfunkbasisstation (MeNB) einer Weiterleitungsstoppanfrage, die einen Stopp der Weiterleitung der Downlinkdaten, die für die Mobilstation (UE) bestimmt sind, anfragt, an die erste Kleinzellenfunkbasisstation (SeNB#1), wenn die Qualitätsverschlechterung eines Funklinks mit der ersten Kleinzellenfunkbasisstation (SeNB#1) erfasst wird mittels der Mobilstation (UE);
Stoppen, mittels der Makrozellenfunkbasisstation (MeNB), der Weiterleitung der Downlinkdaten, die für die Mobilstation (UE) bestimmt sind, an die erste Kleinzellenfunkbasisstation (SeNB#1), als Antwort auf das Empfangen, mittels der Makrozellenfunkbasisstation (MeNB), der Weiterleitungsstoppanfrage;
Senden, mittels der ersten Kleinzellenfunkbasisstation (SeNB#1), an
eine zweite Kleinzellenfunkbasisstation (SeNB#2) einer Vermittlungsanfrage, die eine Kleinzellenfunkbasisstationsvermittlung anfragt, wenn eine Messmeldung empfangen wird, mittels der ersten Kleinzellenfunkbasisstation (SeNB#1), von der Mobilstation (UE); und
Stoppen, mittels der ersten Kleinzellenfunkbasisstation (SeNB#1), des Festsetzens der Downlinkdaten, die für die Mobilstation (UE) bestimmt sind, und Senden, mittels der ersten Kleinzellenfunkbasisstation (SeNB#1), an
die Mobilstation (UE) einer Vermittlungsanweisung, die die Kleinzellenfunkbasisstationsvermittlung anweist, wenn eine Vermittlungsanfrageantwort empfangen wird, mittels der ersten Kleinzellenfunkbasisstation (SeNB#1), von der zweiten Kleinzellenfunkbasisstation (SeNB#2).

4. Mobilkommunikationsverfahren, das ausgeführt werden soll, wenn eine Mobilstation (UE) Trägeraggregation unter Verwendung einer Makrozelle unter einer Makrozellenfunkbasisstation (MeNB) und einer Kleinzelle unter einer ersten Kleinzellenfunkbasisstation (SeNB#1) ausführt, wobei das Verfahren umfasst:
Senden, mittels der ersten Kleinzellenfunkbasisstation (SeNB#1), an
eine zweite Kleinzellenfunkbasisstation (SeNB#2) einer Vermittlungsanfrage, die eine Kleinzellenfunkbasisstationsvermittlung anfragt, und Senden an
die Makrozellenfunkbasisstation (MeNB) einer Weiterleitungsstoppanfrage, die einen Stopp der Weiterleitung der Downlinkdaten, die für die Mobilstation (UE) bestimmt sind, anfragt, an die erste Kleinzellenfunkbasisstation (SeNB#1), wenn eine Messmeldung empfangen wird, mittels der ersten Kleinzellenfunkbasisstation (SeNB#1), von der Mobilstation (UE);
Stoppen, mittels der Makrozellenfunkbasisstation (MeNB), der Weiterleitung der Downlinkdaten, die für die Mobilstation (UE) bestimmt sind, an die erste Kleinzellenfunkbasisstation (SeNB#1), als Antwort auf das Empfangen, mittels der Makrozellenfunkbasisstation (MeNB), der Weiterleitungsstoppanfrage; und
Stoppen, mittels der ersten Kleinzellenfunkbasisstation (SeNB#1), des Festsetzens der Downlinkdaten, die für die Mobilstation (UE) bestimmt sind, und Senden, mittels der ersten Kleinzellenfunkbasisstation (SeNB#1), an die Mobilstation (UE) einer Vermittlungsanweisung, die eine Kleinzellenfunkbasisstationsvermittlung anweist, wenn eine Vermittlungsanfrageantwort empfangen wird, mittels der ersten Kleinzellenfunkbasisstation (SeNB#1), von der zweiten Kleinzellenfunkbasisstation (SeNB#2).

5. Mobilkommunikationsverfahren, das ausgeführt werden soll, wenn eine Mobilstation (UE) Trägeraggregation unter Verwendung einer Makrozelle unter einer Makrozellenfunkbasisstation (MeNB) und einer Kleinzelle unter einer ersten Kleinzellenfunkbasisstation (SeNB#1) ausführt, wobei das Verfahren umfasst:
Senden, mittels der ersten Kleinzellenfunkbasisstation (SeNB#1), an
die Makrozellenfunkbasisstation (MeNB) einer Weiterleitungsstoppanfrage, die einen Stopp der Weiterleitung von Downlinkdaten, die für die Mobilstation (UE) bestimmt sind, anfragt, an die erste Kleinzellenfunkbasisstation (SeNB#1), wenn eine Qualitätsverschlechterung eines Funklinks mit der Mobilstation (UE) erfasst wird mittels der ersten Kleinzellenfunkbasisstation (SeNB#1);
Stoppen, mittels der Makrozellenfunkbasisstation (MeNB), der Weiterleitung der Downlinkdaten, die für die Mobilstation (UE) bestimmt sind, an die erste Kleinzellenfunkbasisstation (SeNB#1), als Antwort auf das Empfangen, mittels der Makrozellenfunkbasisstation (MeNB), der Weiterleitungsstoppanfrage;
Senden, mittels der ersten Kleinzellenfunkbasisstation (SeNB#1), an
eine zweite Kleinzellenfunkbasisstation (SeNB#2) einer Vermittlungsanfrage, die eine Kleinzellenfunkbasisstationsvermittlung anfragt, wenn eine Messmeldung empfangen wird, mittels der ersten Kleinzellenfunkbasisstation (SeNB#1), von der Mobilstation (UE); und
Stoppen, mittels der ersten Kleinzellenfunkbasisstation (SeNB#1), des Festsetzens der Downlinkdaten, die für die Mobilstation (UE) bestimmt sind, und Senden, mittels der ersten Kleinzellenfunkbasisstation (SeNB#1), an die Mobilstation (UE) eines Änderungskommandos, das eine Kleinzellenfunkbasisstationsvermittlung anweist, wenn die Vermittlungsanfrageantwort empfangen wird, mittels der ersten Kleinzellenfunkbasisstation (SeNB#1), von der zweiten Kleinzellenfunkbasisstation (SeNB#2).

## Revendications

1. Procédé de communication mobile à exécuter lorsqu'une station mobile (UE) réalise une agrégation de porteuses à l'aide d'une macrocellule desservie par une station de base radio de macrocellule (MeNB) et d'une petite cellule desservie par une première station de base radio de petite cellule (SeNB#1), le procédé comprenant :
l'envoi, par la première station de base radio de petite cellule (SeNB#1), à une seconde station de base radio de petite cellule (SeNB#2) d'une demande de commutation qui demande une commutation de station de base radio de petite cellule, lorsqu'un rapport de mesure en provenance de la station mobile (UE) est reçu par la première station de base radio de petite cellule (SeNB#1);
l'arrêt, par la première station de base radio de petite cellule (SeNB#1), d'une planification de données de liaison descendante destinées à la station mobile (UE), et l'envoi, par la première station de base radio de petite cellule (SeNB#1), à la station mobile (UE) d'un ordre de commutation ordonnant la commutation de station de base radio de petite cellule, lorsqu'une réponse de demande de commutation provenant de la seconde station de base radio de petite cellule (SeNB#2) est reçue par la première station de base radio de petite cellule (SeNB#1);
l'envoi, par la station mobile (UE), à la station de base radio de macrocellule (MeNB) d'une demande d'arrêt d'acheminement qui demande l'arrêt de l'acheminement des données de liaison descendante destinées à la station mobile (UE) à la première station de base radio de petite cellule (SeNB#1), en réponse à la réception, par la station mobile (UE), de l'instruction de commutation ; et
l'arrêt, par la station de base radio de macrocellule (MeNB), de l'acheminement des données de liaison descendante destinées à la station mobile (UE) à la première station de base radio de petite cellule (SeNB#1), en réponse à la réception, par la station de base radio de macrocellule (MeNB), de la demande d'arrêt d'acheminement.

2. Procédé de communication mobile à exécuter lorsqu'une station mobile (UE) réalise une agrégation de porteuses à l'aide d'une macrocellule desservie par une station de base radio de macrocellule (MeNB) et d'une petite cellule desservie par une première station de base radio de petite cellule (SeNB#1), le procédé comprenant :
l'envoi, par la station mobile (UE), à la station de base radio de macrocellule (MeNB) d'une demande d'arrêt d'acheminement qui demande d'arrêter un acheminement de données de liaison descendante destinées à la station mobile (UE) à la première station de base radio de petite cellule (SeNB#1), lorsqu'un rapport de mesure est transmis, par la station mobile (UE), à la première station de base radio de petite cellule (SeNB#1);
l'arrêt, par la station de base radio de macrocellule (MeNB), de l'acheminement des données de liaison descendante destinées à la station mobile (UE) à la première station de base radio de petite cellule (SeNB#1), en réponse à la réception, par la station de base radio de macrocellule (MeNB), de la demande d'arrêt d'acheminement ;
l'envoi, par la première station de base radio de petite cellule (SeNB#1), à une seconde station de base radio de petite cellule (SeNB#2) d'une demande de commutation qui demande une commutation de station de base radio de petite cellule, lorsque le rapport de mesure est reçu, par la première station de base radio de petite cellule (SeNB#1), en provenance de la station mobile (UE) ; et
l'arrêt, par la première station de base radio de petite cellule (SeNB#1), d'une planification des données de liaison descendante destinées à la station mobile (UE), et l'envoi, par la première station de base radio de petite cellule (SeNB#1), à la station mobile (UE) d'un ordre de commutation ordonnant la commutation de station de base radio de petite cellule, lorsqu'une réponse de demande de commutation est reçue, par la première station de base radio de petite cellule (SeNB#1), en provenance de la seconde station de base radio de petite cellule (SeNB#2).

3. Procédé de communication mobile à exécuter lorsqu'une station mobile (UE) réalise une agrégation de porteuses à l'aide d'une macrocellule desservie par une station de base radio de macrocellule (MeNB) et d'une petite cellule desservie par une première station de base radio de petite cellule (SeNB#1), le procédé comprenant :
l'envoi, par la station mobile (UE), à la station de base radio de macrocellule (MeNB) d'une demande d'arrêt d'acheminement qui demande d'arrêter un acheminement de données de liaison descendante destinées à la station mobile (UE) à la première station de base radio de petite cellule (SeNB#1), lorsqu'une dégradation de qualité d'une liaison radio avec la première station de base radio de petite cellule (SeNB#1) est détectée par la station mobile (UE) ;
l'arrêt, par la station de base radio de macrocellule (MeNB), de l'acheminement des données de liaison descendante destinées à la station mobile (UE) à la première station de base radio de petite cellule (SeNB#1), en réponse à la réception, par la station de base radio de macrocellule (MeNB), de la demande d'arrêt d'acheminement ;
l'envoi, par la première station de base radio de petite cellule (SeNB#1), à une seconde station de base radio de petite cellule (SeNB#2) d'une demande de commutation qui demande une commutation de station de base radio de petite cellule, lorsqu'un rapport de mesure est reçu, par la première station de base radio de petite cellule (SeNB#1), en provenance de la station mobile (UE) ; et
l'arrêt, par la première station de base radio de petite cellule (SeNB#1), d'une planification des données de liaison descendante destinées à la station mobile (UE), et l'envoi, par la première station de base radio de petite cellule (SeNB#1), à la station mobile (UE) d'un ordre de commutation ordonnant la commutation de station de base radio de petite cellule, lorsqu'une réponse à la demande de commutation est reçue, par la première station de base radio de petite cellule (SeNB#1), en provenance de la seconde station de base radio de petite cellule (SeNB#2).

4. Procédé de communication mobile à exécuter lorsqu'une station mobile (UE) réalise une agrégation de porteuses à l'aide d'une macrocellule desservie par une station de base radio de macrocellule (MeNB) et d'une petite cellule desservie par une première station de base radio de petite cellule (SeNB#1), le procédé comprenant :
l'envoi, par la première station de base radio de petite cellule (SeNB#1), à une seconde station de base radio de petite cellule (SeNB#2)' d'une demande de commutation qui demande une commutation de station de base radio de petite cellule, et l'envoi à la station de base radio de macrocellule (MeNB) d'une demande d'arrêt d'acheminement qui demande d'arrêter un acheminement de données de liaison descendante destinées à la station mobile (UE) à la première station de base radio de petite cellule (SeNB#1), lorsqu'un rapport de mesure est reçu, par la première station de base radio de petite cellule (SeNB#1), en provenance de la station mobile (UE) ;
l'arrêt, par la station de base radio de macrocellule (MeNB), de l'acheminement des données de liaison descendante destinées à la station mobile (UE) à la première station de base radio de petite cellule (SeNB#1), en réponse à la réception, par la station de base radio de macrocellule (MeNB), de la demande d'arrêt d'acheminement; et
l'arrêt, par la première station de base radio de petite cellule (SeNB#1), d'une planification des données de liaison descendante destinées à la station mobile (UE), et l'envoi, par la première station de base radio de petite cellule (SeNB#1), à la station mobile (UE) d'un ordre de commutation ordonnant la commutation de station de base radio de petite cellule, lorsqu'une réponse à la demande de commutation est reçue, par la première station de base radio de petite cellule (SeNB#1), en provenance de la seconde station de base radio de petite cellule (SeNB#2).

5. Procédé de communication mobile à exécuter lorsqu'une station mobile (UE) réalise une agrégation de porteuses à l'aide d'une macrocellule desservie par une station de base radio de macrocellule (MeNB) et d'une petite cellule desservie par une première station de base radio de petite cellule (SeNB#1), le procédé comprenant :
l'envoi, par la première station de base radio de petite cellule (SeNB#1), à la station de base radio de macrocellule (MeNB) d'une demande d'arrêt d'acheminement qui demande d'arrêter un acheminement de données de liaison descendante destinées à la station mobile (UE) à la première station de base radio de petite cellule (SeNB#1), lorsqu'une dégradation de qualité d'une liaison radio avec la station mobile (UE) est détectée par la première station de base radio de petite cellule (SeNB#1);
l'arrêt, par la station de base radio de macrocellule (MeNB), de l'acheminement des données de liaison descendante destinées à la station mobile (UE) à la première station de base radio de petite cellule (SeNB#1), en réponse à la réception, par la station de base radio de macrocellule (MeNB), de la demande d'arrêt d'acheminement ;
l'envoi, par la première station de base radio de petite cellule (SeNB#1), à une seconde station de base radio de petite cellule (SeNB#2) d'une demande de commutation qui demande une commutation de station de base radio de petite cellule, lorsqu'un rapport de mesure est reçu, par la première station de base radio de petite cellule (SeNB#1), en provenance de la station mobile (UE); et
l'arrêt, par la première station de base radio de petite cellule (SeNB#1), d'une planification des données de liaison descendante destinées à la station mobile (UE), et l'envoi, par la première station de base radio de petite cellule (SeNB#1), à la station mobile (UE) d'une commande de changement ordonnant la commutation de station de base radio de petite cellule, lorsqu'une réponse à la demande de commutation est reçue, par la première station de base radio de petite cellule (SeNB#1), en provenance de la seconde station de base radio de petite cellule (SeNB#2).
